# EUROPÄISCHE PATENTSCHRIFT

(11) **EP 0 735 004 B1**
(45) Veröffentlichungstag und Bekanntmachung des Hinweises auf die Patenterteilung: **02.02.2000**
(21) Anmeldenummer: 96104216.5
(22) Anmeldetag: 16.03.1996
(51) Int. Cl.: C01G 45/00, C01G 51/00, C01G 53/00, H01M 4/50, H01M 4/52

(54) **Verfahren zur Herstellung von Lithium-Interkalationsverbindungen**
Process for the preparation of lithium intercalation compounds
Procédé de préparation de composés d'intercalation au lithium

(30) Priorität: 28.03.1995 DE 19511355
(43) Veröffentlichungstag der Anmeldung: 02.10.1996
(73) Patentinhaber: MERCK PATENT GmbH, 64293 Darmstadt (DE)
(72) Erfinder: van Ghemen, Max, 64287 Darmstadt (DE); Sauerbrey, Birgit, 64625 Bensheim (DE); Pohl, Ludwig, Dr., 64285 Darmstadt (DE)

(56) Entgegenhaltungen:
- PATENT ABSTRACTS OF JAPAN vol. 015, no. 284 (E-1091), 18.Juli 1991 & JP-A-03 098262 (BRIDGESTONE CORP)

## Beschreibung

Die Erfindung betrifft ein Verfahren zur Herstellung von Lithium-Interkalationsverbindungen.

Übergangsmetalloxide besitzen die Eigenschaft Metallionen geeigneter Größe zu interkalieren, also auf Gitter- und/oder Zwischengitterplätzen ihres Kristallgitters einzulagern. Dieser Vorgang kann unter bestimmten Bedingungen reversibel sein.

Von besonderer technischer und wirtschaftlicher Bedeutung sind Lithium-Übergangsmetall-Interkalationsverbindungen wie insbesondere die Lithium-Mangan-Oxide, Lithium-Nickel-Oxide und Lithium-Kobalt-Oxide. Typische derartige Verbindungen sind LiMn₂O₄, Li₂Mn₂O₄, LiCoO₂ und LiNiO₂. Neben den genannten Interkalationsverbindungen diskreter Stöchiometrie sind entsprechende Formen mit nicht-stöchiometrischer Zusammensetzung, insbesondere in Bezug auf den Lithium-Gehalt, bekannt. Weiterhin können auch gemischte Übergangsmetalloxide und mit weiteren Elementen dotierte Oxide die Basis für Interkalationsverbindungen bilden. Der LiMn₂O₄-Spinell steht im Mittelpunkt des Interesses, da diese Verbindung in Bezug auf Ausgangsmaterialien und Herstellung als kostengünstig und unweltfreundlich gilt. Die genannten Verbindungen besitzen die Eigenschaft einer gemischten Elektronen-Ionen-Leitfähigkeit. Bei Vorliegen bestimmter Potentialdifferenzen können in die Kristallverbände dieser Verbindungen Li⁺-Ionen eingelagert oder wieder ausgelagert werden. Diese Verbindungen eignen sich daher zur Herstellung von Elektrodenmaterialien für Lithium-Batterien und insbesondere Lithium-Sekundärbatterien. Die Lithium-Interkalationsverbindungen werden normalerweise als Kathodenmaterial eingesetzt. Dabei erfolgt die Elektrodenherstellung im Prinzip durch Verpressen von feinpulverigem Lithium-Übergangsmetalloxid und Kohlenstoff (Graphit oder Rußkohle) mit einem organischen Binder. Eine Lithium-Sekundärbatteriezelle setzt sich in der Regel aus einer solchen Interkalations-Kathode, einer Anode basierend auf metallischem Lithium oder auf Kohlenstoff und einem Lithiumionen-haltigen nichtwäßrigen Elektrolyt zusammen. Bei solchen Batterien kommt es auf eine hohe Kapazität, eine lange Lebensdauer über viele Lade-/Entladezyklen hinweg bei möglichst gleichbleibender Kapazität und auf Spannungskonstanz an. Es hat sich herausgestellt, daß für diese Eigenschaften die Qualität der eingesetzen Lithium-Interkalationsverbindungen ein wesentliches Entscheidungskriterium darstellt, wobei den Merkmalen Kristallstruktur, Morphologie und Korngröße besondere Bedeutung zukommt. Diese Merkmale sind in besonderem Maße von Art und Weise der Herstellung der Interkalationsverbindung abhängig.

Die meisten hierzu bekannt gewordenen Verfahren basieren auf dem "Mixed-Oxide-Verfahren", in dessen Zentrum eine thermische Festkörperreaktion steht, bei der sich die entsprechenden Oxide zu der Lithium-Interkalationsverbindung umsetzen. Hierfür werden die entsprechenden Oxide oder Oxid-Vorstufen wie Hydroxide, Carbonate, Nitrate, Acetate etc. wiederholt gemischt, vermahlen und geglüht. Die zentrale thermische Festkörperreaktion erfordert je nach Partikelfeinheit der Komponenten und der Intensität ihrer Vermischung Temperaturen zwischen 500 und 1000 °C und Reaktionszeiten von mindestens 24 Stunden, in aller Regel jedoch von mehreren Tagen, um vollständige Umsetzung und die gewünschten Qualitätsmerkmale zu erreichen (siehe z.B.: Guyomard et al., Solid State lonics 69 (1994) 222-237). Je nach Wahl der Ausgangssubstanzen und deren Oxidationsstufe und angestrebtem Endprodukt - dies trifft in besonderem Maße bei Systemen zu, die auf Manganoxid basieren, - kann es erforderlich sein, die thermische Festkörperreaktion an oxidierender, reduzierender oder inerter Atmosphäre vorzunehmen.

Andere Verfahrensprinzipien zur Erzeugung einer möglichst homogenen Vormischung der Komponenten wie etwa das Sol-Gel-Verfahren (siehe z.B. WO 92/18425) mögen im Einzelfall unter Umständen zu einer gewissen Reduzierung von Reaktionstemperatur und Reaktionszeit bei der Festkörperreaktion führen. Dafür sind sie aber aufgrund der wesentlich teureren Ausgangsstoffe, der aufwendigeren Reaktionsführung und Steuerung für die technische und insbesondere industrielle Anwendung weniger geeignet.

Das Mixed-Oxide-Verfahren bleibt daher im Zentrum des Interesses, da es im Grunde genommen einfach und auch ohne weiteres im industriellen Maßstab durchzuführen ist, auch wenn die erforderlichen hohen Reaktionstemperaturen und langen Reaktionszeiten als sehr nachteilig empfunden werden.

Der vorliegenden Erfindung lag daher die Aufgabe zugrunde, das Mixed-Oxide-Verfahren zur Herstellung von Lithium-Interkalationsverbindungen in Bezug auf wesentliche Verfahrensparameter wie Reaktionszeit und Reaktionstemperatur zu verbessern.

Überraschend wurde nun gefunden, daß bei Behandlung einer wäßrigen Suspension des Gemisches der Rohstoffkomponenten Lithiumhydroxid bzw. Lithiumoxid und Metalloxid bzw. Metalloxid-Vorstufen mit Wasserstoffperoxid die in Wasser an sich wenig lösliche Lithiumverbindung in Lösung geht und bei der Trocknung des Gemisches sehr gleichmäßig auf das Metalloxid aufzieht. Hierdurch erhält man ein äußerst homogenes Gemisch der Komponenten, das durch Kalzinieren bei Temperaturen zwischen 450 und 700 °C bereits in weniger als 5 Stunden vollständig zu der Lithium-Interkalationsverbindung umgesetzt werden kann.

Gegenstand der Erfindung ist somit ein Verfahren zur Herstellung von Lithium-Interkalationsverbindungen durch thermische Festkörperreaktion von Gemischen aus Lithium-Hydroxid oder Lithiumoxid und Oxiden oder Oxid-vorstufen von Übergangsmetallen, das durch folgende Schritte gekennzeichnet ist:
a) Mischen feinteiliger Pulver der Komponenten im entsprechenden stöchiometrischen Verhältnis in wäßriger Suspension
b) Zugabe von Wasserstoffperoxid
c) Eindunsten des Reaktionsgemisches und Trocknen des Pulvers
d) Kalzinieren des Pulvers.

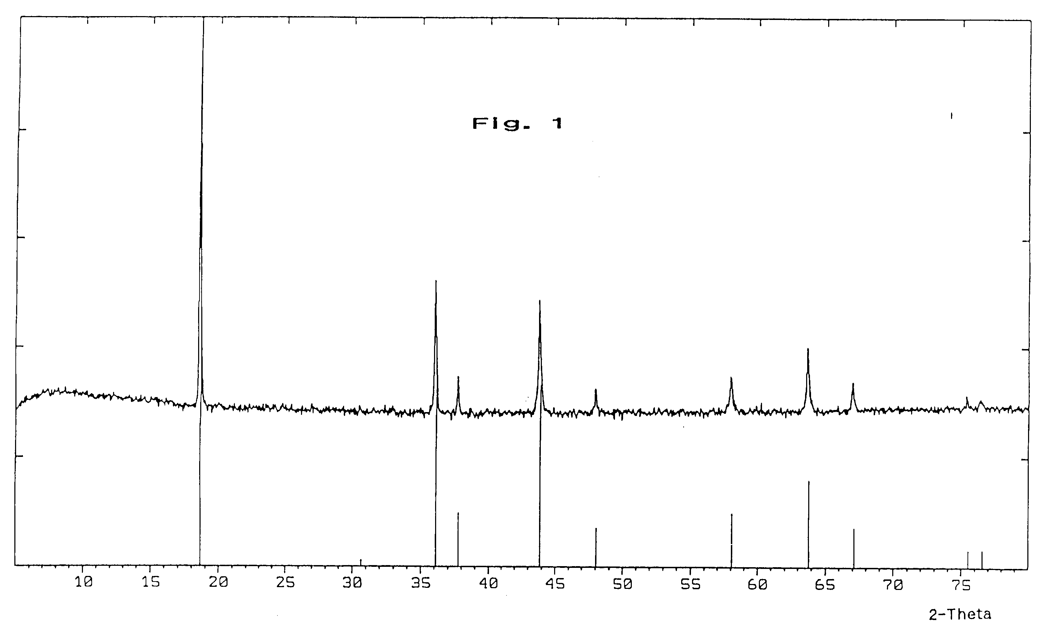

Figur 1 zeigt das Röntgendiffraktogramm von LiMn₂O₄, hergestellt nach dem erfindungsgemäßen Verfahren (siehe Beispiel 1). Nach 2 Stunden Kalzinieren an Luft bei 700 °C erscheinen ausschließlich die für LiMn₂O₄ charakteristischen Peaks bei 2-Theta-Werten 18,611, 36,086, 37,748, 43,870, 48,048, 58,058, 63,782, 67,081, 75,528, 76,549.

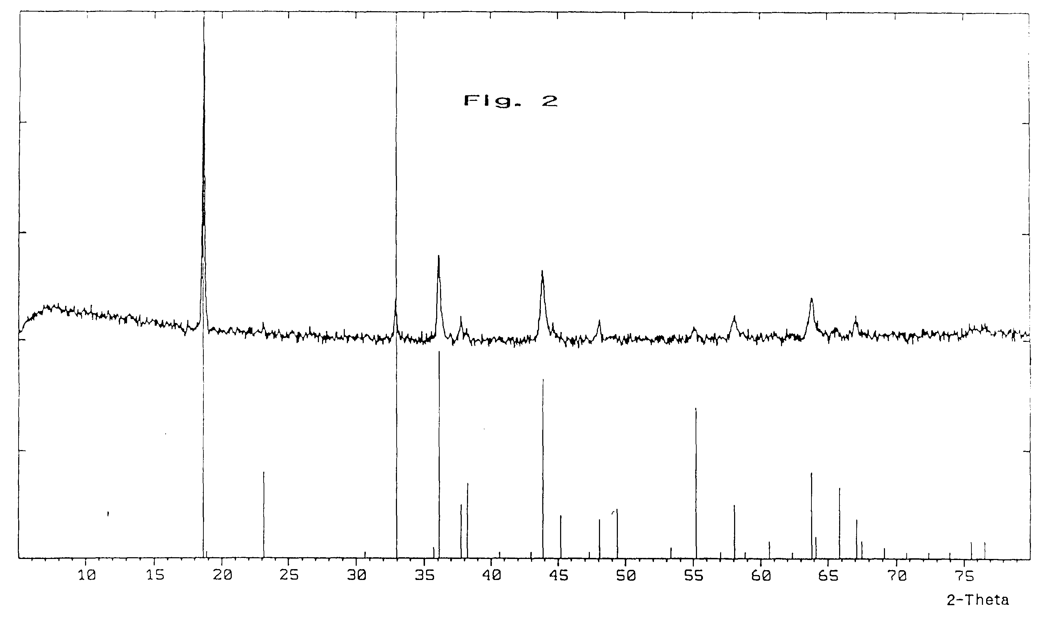

Figur 2 zeigt das Röntgendiffraktogramm von LiMn₂O₄ hergestellt nach dem Mixed-Oxide-Verfahren entsprechend dem Stand der Technik (siehe Beispiel 2). Nach 5 Stunden Kalzinieren an Luft bei 700 °C sind neben den für LiMn₂O₄ charakteristischen Peaks (siehe Figur 1) aufgrund unvollständiger Umsetzung deutliche Signale von Mn₂O₃ bei 2-Theta-Werten 23,120, 32,921, 38,201, 55,141, 65,724 zu erkennen.

Für das erfindungsgemäße Verfahren dient als Lithium-haltige Ausgangssubstanz Lithiumhydroxid (LiOH · H₂O) oder Lithiumoxid. Als Ausgangssubstanzen für die Übergangsmetallkomponenten dienen in erster Linie die Oxide von Mangan (MnO₂), Nickel (NiO) und Kobalt (Co₃O₄). Gleichermaßen können als Übergangsmetallkomponenten auch entsprechende Oxidvorstufen Verwendung finden, also solche Verbindungen, die sich thermisch leicht in die Oxide umwandeln lassen. Dies können sein entsprechende Hydroxide wie etwa Ni(OH)₂ oder Carbonate, Nitrate und Acetate. Die Oxide sind jedoch bevorzugt, da diese in aller Regel preisgünstiger sind. Alle diese Substanzen sind als feinpulverige Produkte und in geeigneter Qualität im Handel erhältlich. Die maximale Partikelgröße sollte zweckmäßigerweise 1000 µm nicht überschreiten. Gegebenenfalls ist ein Mahlvorgang vorzuschalten. Günstig sind Pulver mit Partikelgrößen von ca. 1-250 µm.

Im ersten Schritt des erfindungsgemäßen Verfahrens werden die jeweiligen feinpulverigen Komponenten im entsprechenden stöchiometrischen Verhältnis, wie es im gewünschten Endprodukt vorliegt, gemischt und in Wasser zu einer Suspension aufgeschlämmt.

Für LiMn₂O₄ werden Lithiumhydroxid und Mangandioxid im molaren Verhältnis 1 : 2, für Li₂Mn₂O₄ im molaren Verhältnis 1 : 1 gemischt. Für LiNiO₂ werden Lithiumhydroxid und Nickeloxid im molaren Verhältnis 1 : 1 und für LiCoO₂ werden Lithiumhydroxid und Kobaltoxid (Co₃O₄) im Verhältnis 3 : 1 gemischt. Die Aufschlämmung des Pulvergemisches in Wasser dient im wesentlichen dazu die Zersetzungsreaktion nach der Zugabe von Wasserstoffperoxid im zweiten Verfahrensschritt unter Kontrolle zu halten. Die Reaktion sollte dabei nicht zu stürmisch aber auch nicht zu verhalten ablaufen. Das Verhältnis von Wasser zu Pulvergemisch ist im wesentlichen unkritisch und kann im Hinblick auf den Reaktionsverlauf im zweiten Schritt durch einfaches Ausprobieren festgelegt werden. Als gut praktikabel hat sich bei einmolaren Ansätzen eine Menge an Wasser von ca. 100 ml erwiesen.

Im zweiten Schritt des erfindungsgemäßen Verfahrens gibt man unter Rühren Wasserstoffperoxid zu der Pulversuspension. Hierbei setzt eine je nach Konzentration des Wasserstoffperoxids im Gemisch mehr oder weniger heftige Zersetzungsreaktion ein, bei der aus dem Wasserstoffperoxid in bekannter Weise Sauerstoff freigesetzt wird. Im Laufe dieser Reaktion geht das im Gemisch enthaltene Lithiumhydroxid bzw. Lithiumoxid praktisch vollständig in Lösung. Dies ist überraschend, da Lithiumhydroxid und Lithiumoxid in Wasser an sich nur schwer löslich sind und aus der Zersetzung von Wasserstoffperoxid an sich letztendlich nur Wasser resultiert. Das in diesem Verfahrensschritt erforderliche Wasserstoffperoxid wird in Bezug auf die Lithiumverbindung im molaren Verhältnis von mindestens 0,3 : 1 eingesetzt. Bevorzugt ist ein molares Verhältnis von Wasserstoffperoxid zu Lithiumhydroxid wie 1 : 1 bis 2 : 1. Größere Mengen an Wasserstoffperoxid sind an sich unkritisch, aber dann eher unwirtschaftlich. Das Wasserstoffperoxid wird zweckmäßigerweise in konzentrierter Form, etwa als handelsübliche 30%ige wäßrige Lösung eingesetzt.

Nachdem die Reaktion abgeklungen ist, wird im dritten Verfahrensschritt das Reaktionsgemisch eingedunstet und das Pulver getrocknet. Hierdurch erfolgt ein sehr gleichmäßiges Aufziehen des im zweiten Schritt aufgelösten Lithiumhydroxid auf das Übergangsmetalloxidpulver. Das Eindunsten erfolgt in üblicher Arbeitstechnik unter Erwärmen und zweckmäßigerweise bei reduziertem Druck. Gleiches gilt für das Trocknen des Pulvergemisches.

Im letzten Schritt des erfindungsgemäßen Verfahrens erfolgt die thermische Festkörperreaktion, bei der das Pulvergemisch zu der Lithium-Interkalationsverbindung umgesetzt wird. Hierzu wird das Pulver bei einer Temperatur zwischen 450 und 700 °C kalziniert. Überraschend hat sich hierbei gezeigt, daß die Reaktion bereits innerhalb einer Zeit von weniger als 5 Stunden abgeschlossen ist. Typisch ist eine Kalzinationsdauer von 1 bis 3 Stunden im angegebenen Temperaturbereich. Eine Behandlung bei einer Temperatur von ca. 700 °C über eine Zeit von 2 Stunden ist zweckmäßig und in der Regel vollauf ausreichend.

Die vollständige Umsetzung zeigt sich in den Röntgendiffraktogrammen der Reaktionsprodukte, die ausschließlich die für die Lithium-Interkalationsverbindungen typischen Reflexe (Vergleich mit ASTM-Karten der entsprechenden Materialien) und keine Reflexe der Ausgangssubstanzen oder anderer Übergangsphasen zeigen. Wird statt dessen nach dem üblichen Mixed-Oxide-Verfahren vorgegangen, so sind in den Röntgendiffraktogrammen auch noch nach 5 Stunden Kalzination Reflexe von Phasen aufgrund unvollständiger Umsetzung zu erkennen.

Die mit dem erfindungsgemäßen Verfahren hergestellten Lithium-Interkalationsverbindungen eignen sich vorzüglich als aktive Materialien in Elektroden, insbesondere Kathoden, von Lithium-Batterien und Lithium-Sekundärbatterien. Besonders bevorzugt ist hierbei der LiMn₂O₄-Spinell. Es hat sich gezeigt, daß die Lithium-Sekundärbatterien, deren Kathoden aus erfindungsgemäß hergestellten Materialien gefertigt sind, erhöhte Kapazität, bessere Spannungskonstanz und eine erhöhte Zahl von Lade/Entladezyklen aufweisen.

### Beispiel 1: Herstellung von LiMn₂O₄ aus MnO₂ und LiOH · H₂O

1 mol LiOH · H₂O (41,96 g) und 2 mol MnO₂ (173,88 g) werden in 100 ml H₂O angeschlämmt. Dazu gibt man portionsweise ca. 1,6 mol (160 ml) 30 % H₂O₂. Dabei geht LiOH · H₂O (weiße Körner in der schwarzen MnO₂-Suspension) in Lösung. Nach Abklingen der Reaktion (O₂-Entwicklung) engt man im Wasserbad (bei 70 °C) und Vakuum (ca. 80 mbar) bis fast zur Trockne ein. Den Rückstand trocknet man noch über Nacht (ca. 150 °C/ 50 mbar) und zerkleinert ihn. Das hierbei gewonnene Pulvergemisch kalziniert man anschließend 2 h an Luft bei 700 °C. Man erhält ein lockeres grau-schwarzes, pulveriges Produkt, dessen Röntgendiffraktogramm die Linien eines kristallin gut ausgebildeten LiMn₂O₄ zeigt (Fig. 1).

### Beispiel 2: Herstellung von LiMn₂O₄ aus MnO₂ und LiOH · H₂O (Vergleichsversuch)

1 mol LiOH · H₂O (41,96 g) und 2 mol MnO₂ (173,88 g) werden 10 Minuten in einer Achatmörsermühle vermahlen. Das Pulvergemisch kalziniert man anschließend 5 h an Luft bei 700 °C. Man erhält ein lockeres, inhomogenes, von roten Partikeln durchsetztes, grau-schwarzes, pulveriges Produkt, dessen Röntgendiffraktogramm eine unvollständige Umsetzung zeigt (Fig. 2).

### Beispiel 3: Herstellung von LiNiO₂ aus NiO und LiOH · H₂O

1 mol LiOH · H₂O (41,96 g) und 1 mol NiO (74,69 g) werden in 100 ml H₂O angeschlämmt. Dazu gibt man portionsweise ca. 1 mol (100 ml) 30 % H₂O₂. Nach Abklingen der Reaktion (O₂-Entwicklung) engt man im Wasserbad (bei 70 °C) und Vakuum (ca. 80 mbar) bis fast zur Trockne ein. Den Rückstand trocknet man noch über Nacht (ca. 150 °C/50 mbar) und zerkleinert ihn. Das hierbei gewonnene Pulvergemisch kalziniert man anschließend 1 h an Luft bei 700 °C. Das Röntgendiffraktogramm zeigt die Linien eines kristallin gut ausgebildeten LiNiO₂.

### Beispiel 4: Herstellung von LiNiO₂ aus Ni(OH)₂ und LiOH · H₂O

1 mol LiOH · H₂O (41,96 g) und 1 mol Ni(OH)₂ (92,70 g) werden in 100 ml H₂O angeschlämmt. Dazu gibt man portionsweise ca. 1 mol (100 ml) 30 % H₂O₂. Nach Abklingen der Reaktion (O₂-Entwicklung) engt man im Wasserbad (bei 70 °C) und Vakuum (ca. 80 mbar) bis fast zur Trockne ein. Den Rückstand trocknet man noch über Nacht (ca. 150 °C/50 mbar) und zerkleinert ihn. Das hierbei gewonnene Pulvergemisch kalziniert man anschließend 1 h an Luft bei 700 °C. Das Röntgendiffraktogramm zeigt die Linien eines kristallin gut ausgebildeten LiNiO₂.

### Beispiel 5: Herstellung von LiCoO₂ aus Co₃O₄ und LIOH · H₂O

1 mol LiOH · H₂O (41,96 g) und 1/3 mol Co₃O₄ (80,26 g) werden in 100 ml H₂O angeschlämmt. Dazu gibt man portionsweise ca. 2 mol (200 ml) 30 % H₂O₂. Nach Abklingen der Reaktion (O₂-Entwicklung) engt man im Wasserbad (bei 70 °C) und Vakuum (ca. 80 mbar) bis fast zur Trockne ein. Den Rückstand trocknet man noch über Nacht (ca. 150 °C/50 mbar) und zerkleinert ihn. Das hierbei gewonnene Pulvergemisch kalziniert man anschließend 1 h an Luft bei 700 °C. Das Röntgendiffraktrogramm zeigt die Linien eines kristallin gut ausgebildeten LiCoO₂.

## Patentansprüche

1. Verfahren zur Herstellung von Lithium-Interkalationsverbindungen durch thermische Festkörperreaktion von Gemischen aus Lithium-hydroxid oder Lithiumoxid und Oxiden oder Oxidvorstufen von Übergangsmetallen, gekennzeichnet durch folgende Schritte
a) Mischen feinteiliger Pulver der Komponenten im entsprechenden stöchiometrischen Verhältnis in wäßriger Suspension
b) Zugabe von Wasserstoffperoxid
c) Eindunsten des Reaktionsgemisches und Trocknen des Pulvers
c) Kalzinieren des Pulvers.

2. Verfahren nach Anspruch 1, dadurch gekennzeichnet, daß man Wasserstoffperoxid in Bezug auf Lithiumhydroxid bzw. Lithiumoxid im molaren Verhältnis von mindestens 0,3 : 1 einsetzt.

3. Verfahren nach Anspruch 2, dadurch gekennzeichnet, daß man Wasserstoffperoxid in Bezug auf Lithiumhydroxid bzw. Lithiumoxid im molaren Verhältnis 1 : 1 bis 2 : 1 einsetzt.

4. Verfahren nach den Ansprüchen 1 bis 3, dadurch gekennzeichnet, daß man das Kalzinieren des Pulvers über einen Zeitraum von 1 - 3 Stunden bei einer Temperatur zwischen 450 und 700 °C durchführt.

5. Verfahren nach den Ansprüchen 1 bis 4, dadurch gekennzeichnet, daß man Oxide bzw. Oxidvorstufen der Metalle Mn, Co oder Ni einsetzt.

6. Verfahren nach den Ansprüchen 1 bis 5 zur Herstellung von Lithium-Interkalationsverbindungen der Zusammensetzung LiMn₂O₄, Li₂Mn₂O₄, LiCoO₂ und LiNiO₂.

7. Verwendung von Lithium-Interkalationsverbindunger, hergestellt nach Verfahren gemäß Ansprüchen 1 bis 6, als aktive Materialien in Elektroden, insbesondere Kathoden, von Lithium-Batterien und Lithium-Sekundärbatterien.

8. Interkalationselektroden enthaltend Lithium-Interkalationsverbindungen, hergestellt nach einem Verfahren gemäß den Ansprüchen 1 bis 6.

9. Lithium-Batterien und Lithium-Sekundärbatterien enthaltend Interkalationselektroden nach Anspruch 8.

## Claims

1. Process for preparing lithium intercalation compounds by thermal solid state reaction of mixtures of lithium hydroxide or lithium oxide and oxides or oxide precursors of transition metals, characterized by the following steps:
a) mixing finely divided powders of the components in the corresponding stoichiometric ratio in aqueous suspension
b) addition of hydrogen peroxide
c) evaporation of the reaction mixture and drying of the powder
d) calcination of the powder.

2. Process according to Claim 1, characterized in that hydrogen peroxide is used in a molar ratio to lithium hydroxide or lithium oxide of at least 0.3:1.

3. Process according to Claim 2, characterized in that hydrogen peroxide is used in a molar ratio to lithium hydroxide or lithium oxide of from 1:1 to 2:1.

4. Process according to any of Claims 1 to 3, characterized in that the powder is calcined for a period of 1 - 3 hours at a temperature between 450 and 700°C.

5. Process according to any of Claims 1 to 4, characterized in that oxide or oxide precursors of the metals Mn, Co or Ni are used.

6. Process according to any of Claims 1 to 5 for preparing lithium intercalation compounds having the composition LiMn₂O₄, Li₂Mn₂O₄, LiCoO₂ and LiNiO₂.

7. Use of lithium intercalation compounds prepared by processes according to any of Claims 1 to 6 as active materials in electrodes, in particular cathodes, of lithium batteries and lithium secondary batteries.

8. Intercalation electrodes containing lithium intercalation compounds prepared by a process according to any of Claims 1 to 6.

9. Lithium batteries and lithium secondary batteries containing intercalation electrodes according to Claim 8.

## Revendications

1. Procédé pour la préparation de composés d'intercalation du lithium par réaction thermique de corps solides de mélanges constitués d'hydroxyde de lithium ou d'oxyde de lithium et d'oxydes ou de précurseurs d'oxydes de métaux de transition, caractérisé par les étapes suivantes :
a) de mélange de poudres finement divisées des composants dans le rapport stoechiométrique correspondant en suspension aqueuse,
b) d'addition d'eau oxygénée,
c) d'évaporation du mélange réactionnel et de séchage de la poudre,
d) de calcination de la poudre.

2. Procédé selon la revendication 1, caractérisé en ce que l'on utilise l'eau oxygénée par rapport à l'hydroxyde de lithium ou à l'oxyde de lithium dans un rapport molaire d'au moins 0,3:1.

3. Procédé selon la revendication 2, caractérisé en ce que l'on utilise l'eau oxygénée par rapport à l'hydroxyde de lithium ou à l'oxyde de lithium dans un rapport molaire compris entre 1:1 et 2:1.

4. Procédé selon les revendications 1 à 3, caractérisé en ce que l'on effectue la calcination de la poudre pendant 1 à 3 heures à une température comprise entre 450 et 700°C.

5. Procédé selon les revendications 1 à 4, caractérisé en ce que l'on utilise les oxydes ou les précurseurs d'oxydes des métaux Mn, Co ou Ni.

6. Procédé selon les revendications 1 à 5 pour la préparation des composés d'intercalation du lithium de composition LiMn₂O₄, Li₂Mn₂O₄, LiCoO₂ et LiNiO₂.

7. Utilisation des composés d'intercalation du lithium préparés par le procédé selon les revendications 1 à 6, comme matériaux actifs dans les électrodes, en particulier dans les cathodes, de batteries au lithium et dans les batteries secondaires au lithium.

8. Électrodes à intercalation contenant des composés d'intercalation du lithium préparés par le procédé selon les revendications 1 à 6.

9. Batteries au lithium et batteries secondaires au lithium comportant des électrodes à intercalation selon la revendication 8.
